# EUROPÄISCHE PATENTANMELDUNG

(11) **EP 1 886 798 A2**
(43) Veröffentlichungstag der Anmeldung: **13.02.2008**
(21) Anmeldenummer: 07014129.6
(22) Anmeldetag: 19.07.2007
(51) Int. Cl.: B32B 7/02

(54) **Dreidimensionales Hohlraumformteil mit mehrschichtigem Aufbau und Verfahren zu seiner Herstellung**

(30) Priorität: 11.08.2006 DE 102006037870; 06.09.2006 DE 102006041714
(71) Anmelder: SKS Sitzkomponenten GmbH & Co. KG, 41065 Mönchengladbach (DE)
(72) Erfinder: Salzmann, Oliver, 47877 Willich (DE)
(74) Vertreter: Gesthuysen, Michael

(57) **Zusammenfassung**

Die Erfindung betrifft ein dreidimensionales Hohlraumformteil mit mehrschichtigem Aufbau mit einem von einem Trägermaterial (2) und einem Abdeckmaterial (3) gebildeten Hohlraum (4). Der Hohlraum ist zwischen dem Trägermaterial (2) und dem Abdeckmaterial (3) angeordnet und mit einem Füllmedium (5) befüllt. Das Hohlraumformteil weist in bezug auf das Trägermaterial (2) und das Abdeckmaterial (3) jeweils eine gegenüber dem Füllmedium (5) zumindest im wesentlichen undurchlässige folienartige Schicht (6a, 6b) auf, welches sich insbesondere zur Verwendung in der Möbelindustrie, insbesondere zur Herstellung von Sitzmöbeln, eignet.

## Beschreibung

Die vorliegende Erfindung betrifft ein dreidimensionales Hohlraumformteil nach Anspruch 1 sowie dessen Verwendung, insbesondere zur Herstellung von Einrichtungsgegenständen, insbesondere Möbeln, vorzugsweise Sitzmöbeln, dekorativen Elementen, Hohlraumkanälen, Automobilzubehör und dergleichen, sowie die damit hergestellten Einrichtungsgegenstände der vorgenannten Art als solche. Schließlich betrifft die vorliegende Erfindung ein Verfahren zur Herstellung eines solchen Hohlraumformteils.

In bezug auf die Herstellung von mehrschichtigen, insbesondere eine thermoplastische Komponente bzw. Schicht enthaltenden Formteilen ist es im Stand der Technik vorgesehen, daß ein umformbares plattenförmiges Ausgangsmaterial, welches im allgemeinen plattenförmig ausgebildet ist, zunächst mittels geeigneter Verfahren in die gewünschte dreidimensionale Form überführt wird. In einem anschließenden Schritt kann auf das so erhaltene dreidimensionale Formteil eine weitere Schicht, beispielsweise ein textiles Flächengebilde oder dergleichen, aufgebracht bzw. dauerhaft hieran befestigt werden. Dabei erfolgt die Befestigung des textilen Flächenmaterials beispielsweise mittels Verklebung oder dergleichen. Zur Verbesserung der Eigenschaften solcher Materialien, insbesondere zur Erhöhung der Ergonomie bzw. anatomischen Anpassung in bezug auf die Verwendung derartiger Formteile beispielsweise für Sitzmöbel, kann es dabei vorgesehen sein, die Formteile mit Hohlräumen bzw. zusätzlichen verformbaren Körpern auszurüsten.

Im Stand der Technik ist es aber oftmals nicht möglich, gezielt Hohlräume, wie insbesondere luftgefüllte Hohlräume, welche beispielsweise in bezug auf Sitzmöbel einen Beitrag zur Verbesserung des Sitzkomforts leisten können, zwischen die jeweiligen Schichten des Formteils einzubringen bzw. anzuordnen insbesondere derart, daß die Hohlräume auch über längere Zeiträume kraftmäßig belastbar und gewissermaßen luftdicht sind. Zudem ist es sich im Rahmen des Standes der Technik schwierig und verfahrenstechnisch aufwendig, das Formteil mit zwischen den Schichten eingelagerten bzw. angeordneten verformbaren Körper auszurüsten, die einen gewissen Polstereffekt aufweisen und den Sitzkomfort weiter erhöhen können, wie beispielsweise Gelkissen oder Schaumstoffkörper. In diesem Zusammenhang ist es im Stand der Technik erforderlich, die vorgenannten verformbaren Körper zunächst in einem separaten Verfahren - also zusätzlich zur Herstellung des Formteils - zu produzieren, was aufwendig und kostenintensiv ist, da diesbezüglich zahlreiche zusätzliche Arbeitsschritte und separate Verfahrensvorrichtungen erforderlich sind. Eine Integration von separat hergestellten verformbaren Körpern in das Formteil ist zudem schwierig, da es oftmals nur unzureichend gelingt, die verformbaren Körper beispielsweise innerhalb des Formteils richtig zu positionieren und dauerhaft mit dem Formteil zu verbinden.

Zudem ist es im Rahmen des Standes der Technik nicht immer gewährleistet, daß ein in das Formteil eingebrachter, bereits in einem separaten Verfahren hergestellter verformbarer Körper, bei der endgültigen Herstellung des Formteils, beispielsweise beim Auflaminieren einer Deck- bzw. Abschlußschicht, seine ursprüngliche Form beibehält, da insbesondere beim Aufziehen eines textilen Flächenmaterials zusätzliche Spannungen und Kräfte auftreten können, welche den verformbaren Körper dauerhaft verformen können.

Weiterhin ist die Tatsache, daß das textile Flächenmaterial erst nach der Umformung des plattenförmigen Trägers und nach dem Ausrüsten des Formteils mit den verformbaren Körpern auf das Trägermaterial aufgebracht wird, nachteilig, weil dies die Verklebung erschwert, wobei es insbesondere oftmals nicht möglich ist, das textile Flächenmaterial ganzflächig mit dem umgeformten Material bzw. dem verformbaren Körper zu verbinden; denn insbesondere im Bereich starker Umformungen, z. B. bei starken Biegungen, Ein- bzw. Auswölbungen oder dergleichen, tritt eine starke Dehn- bzw. Stauchbeanspruchung des textilen Flächenmaterials auf, was oftmals zu einer Ablösung bzw. Delaminierung des Flächenmaterials führen kann. Darüber hinaus tritt beim nachträglichen Aufbringen eines textilen Flächenmaterials auf das bereits umgeformte Material, welches zusätzlich einen verformbaren Körper aufweisen kann, häufig eine unerwünschte Faltenbildung auf. Ein weiterer Nachteil bei diesem Verfahren ist darin zu sehen, daß aufgrund der nachträglichen Fixierung des textilen Flächenmaterials auf die dreidimensionale Struktur eine ungleichmäßige Dehnbeanspruchung des textilen Flächenmaterials resultieren kann, was zu einem uneinheitlichen Oberflächenbild und zudem zu einer unerwünschten dauerhaften Verformung des verformbaren Körpers führen kann. Schließlich können die durch das nachträgliche, mitunter ungleichmäßige "Aufziehen" des textilen Flächenmaterials auf die Trägerstruktur resultieren den hohen bzw. uneinheitlichen Rückstellkräfte auch zu einer nachträglichen Verformung des Formteils führen.

Vor diesem technischen Hintergrund besteht nunmehr die Aufgabe der vorliegenden Erfindung darin, ein dreidimensionales Hohlraumformteil sowie ein Verfahren zu dessen Herstellung bereitzustellen, welches die zuvor geschilderten Nachteile des Standes der Technik zumindest teilweise vermeidet oder aber wenigstens abschwächt. Insbesondere soll ein dreidimensionales Hohlraumformteil mit mehrschichtigem Aufbau bereitgestellt werden, welches mindestens einen in die Schichtstruktur eingebrachten bzw. eingebetteten, mit einem Füllmedium gefüllten Hohlraum aufweist, welcher auch unter starken kraftmäßigen Belastungen, insbesondere Druckbelastungen, nicht zerstört wird bzw. auch über lange Zeiträume eine hohe Dichtheit gegenüber dem Füllmedium aufweist und zu einer signifikanten Verbesserung des Sitzkomforts, beispielsweise in bezug auf Sitzmöbel, führt. Zudem sollen in bezug auf das Hohlraumformteil als solches starke Biegungen, Ein- und Ausbuchtungen und dergleichen realisiert werden können, ohne daß Delaminierungen oder Faltenbildungen in bezug auf die einzelnen Schichten des Formteils oder eine dauerhafte Verformung des mit dem Füllmedium gefüllten Hohlraums auftreten. Schließlich soll das resultierende Hohlraumformteil als solches selbsttragend und in hohem Maße formstabil sein, so daß es sich insbesondere zur Verwendung in Möbeln, wie Sitzmöbeln, eignet.

Zur Lösung der zuvor geschilderten Aufgabenstellung schlägt die vorliegende Erfindung ein dreidimensionales Hohlraumformteil gemäß Anspruch 1 vor. Weitere, vorteilhafte Ausgestaltungen sind Gegenstand der jeweiligen Vorrichtungsunteransprüche.

Weiterhin sind Gegenstand der vorliegenden Erfindung die Verwendung des dreidimensionalen Hohlraumformteils zur Herstellung von Einrichtungsgegenständen, insbesondere Möbeln, vorzugsweise Sitzmöbeln, dekorativen Elementen, Hohlraumkanälen und dergleichen, gemäß Anspruch 14 sowie Einrichtungsgegenstände, insbesondere Möbel, vorzugsweise Sitzmöbel, dekorative Elemente, Hohlraumkanäle und dergleichen gemäß Anspruch 15.

Schließlich ist Gegenstand der vorliegenden Erfindung ein Verfahren zur Herstellung des dreidimensionalen Hohlraumformteils gemäß Anspruch 16.

Ein erster Gegenstand der vorliegenden Erfindung ist somit ein dreidimensionales Hohlraumformteil, welches einen mehrschichtigen Aufbau aufweist und welches sich insbesondere für die Herstellung von Einrichtungsgegenständen, insbesondere Möbeln, vorzugsweise Sitzmöbeln, dekorativen Elementen, Hohlraumkanälen, Automobilzubehör und dergleichen eignet. Das erfindungsgemäße Hohlraumvorteil weist mindestens einen von einem Trägermaterial und einem Abdeckmaterial gebildeten Hohlraum auf, wobei der Hohlraum zwischen dem Trägermaterial und dem Abdeckmaterial angeordnet und von diesen Materialien begrenzt ist und der Hohlraum mit einem Füllmedium ausgefüllt ist. Dabei ist es erfindungsgemäß vorgesehen, daß das Trägermaterial und das Abdeckmaterial gegenüber dem Füllmedium zumindest im wesentlichen undurchlässig sind, wobei das Trägermaterial und/oder das Abdeckmaterial, vorzugsweise mindestens das Abdeckmaterial, jeweils eine gegenüber dem Füllmedium zumindest im wesentlichen undurchlässige folienartige Schicht aufweist bzw. aufweisen.

Wie nachfolgend noch ausführlich geschildert, können sowohl das Trägermaterial als auch das Abdeckmaterial eine Mehrschichtstruktur aufweisen, wobei es insbesondere vorgesehen sein kann, daß mindestens eines der Materialien, vorzugsweise das Trägermaterial, zusätzlich mit einem Träger ausgerüstet ist. Hierdurch sind besonders formstabile Strukturen bzw. Formen realisierbar, die auch einer hohen kraftmäßigen Belastung standhalten können. Zudem kann es vorgesehen sein, daß das Trägermaterial bzw. das Abdeckmaterial zusätzlich mit einem textilen Flächenmaterial ausgerüstet ist, welches vorzugsweise auf der dem Hohlraum abgewandten Seite und somit gewissermaßen nach außen angeordnet ist, wodurch das dreidimensionale Hohlraumformteil nach der Erfindung eine ansprechende Optik bzw. Haptik erhält, so daß es insbesondere zur Verwendung im Bereich der Herstellung von Möbeln geeignet ist.

Eine zentrale Idee der vorliegende Erfindung ist insbesondere darin zu sehen, daß das Hohlraumformteil mit einem hinsichtlich der Formgebung individuell ausgestaltbaren Hohlraum ausgerüstet ist, wobei der Hohlraum mit einem Füllmaterial, welches vorzugsweise reversibel verformbar ist, ausgestattet ist. Aufgrund der erfindungsgemäßen Konzeption des Hohlraums ist dieser selbst insbesondere unter Belastung vorzugsweise reversibel verformbar und weist eine hohe Dichtheit gegenüber dem eingebrachten Füllmedium auf. Hierdurch können unter Verwendung des erfindungsgemäßen dreidimensionalen Hohlraumformteils, insbesondere Möbel, wie Sitzmöbel, hergestellt werden, welche bei hoher kraftmäßiger Belastbarkeit eine anatomische Anpassung in bezug auf den Benutzer sowie eine individuelle Formgebung aufweisen.

Dabei werden die vorgenannten Eigenschaften, insbesondere die hohe Verformbarkeit und Stabilität insbesondere im Sinne einer hohen Dichtheit des mit dem Füllmedium aufgefüllten Hohlraums durch die mindestens für ein Material, d. h. für das Trägermaterial bzw. das Abdeckmaterial, vorzugsweise sowohl für das Trägermaterial als auch das Abdeckmaterial vorgesehene folienartige Schicht gewährleistet, welche bei gleichzeitig hoher, die reversible Verformbarkeit des Hohlraumes zumindest im wesentlichen nicht verringernde Flexibilität gewissermaßen eine Sperr- bzw. Barrierefunktion gegenüber dem Füllmedium des Hohlraums aufweist. Dabei ist es erfindungsgemäß vorgesehen, daß die folienartige(n) Schicht(en) gewissermaßen flächig in das Trägermaterial bzw. das Abdeckmaterial integriert ist bzw. sind. Hierdurch wird es ermöglicht, daß der Hohlraum bzw. das Auffüllen des Hohlraums mit dem Füllmedium bei der Herstellung des dreidimensionalen Hohlraumformteils, welche mit einer Verformung des Trägermaterials und/oder des Abdeckmaterials einhergeht, realisiert werden kann, was eine signifikante verfahrenstechnische Vereinfachung darstellt, da im Rahmen der vorliegenden Erfindung keine separaten Körper, wie beispielsweise ein separat hergestelltes Gelkissen oder ein Schaumstoffkörper, in das Hohlraumformteil eingebracht werden müssen.

Die vorliegende Erfindung zeichnet sich zudem dadurch aus, daß bereits vor dem Schritt bzw. während des Schritts der Formgebung in bezug auf das Trägermaterial und/oder Abdeckmaterial ein jeweils stabiles Verbundmaterial mit dauerhaft und flächig miteinander verbundenen Schichten vorliegen kann, wobei die undurchlässige folienartige Schicht integraler Bestandteil dieses Verbundmaterials, d. h. des Träger- und/oder Abdeckmaterials, sein kann. Somit entfällt ein nachträgliches Aufbringen von Schichten bzw. von separaten, unabhängig vom Formgebungsprozeß hergestellten verformbaren Körpern, da der mit dem Füllmedium ausgefüllte Hohlraum durch integrale Schichten des Formteils, wie insbesondere die folienartige Schicht(en), abgrenzt bzw. ausgebildet wird. Aufgrund dieser Konzeption ist es erfindungsgemäß möglich, individuell an den jeweiligen Verwendungszweck des dreidimensionalen Hohlraumformteils nach der Erfindung angepaßte Hohlräume mit Füllmaterialien bereits während der Umformung zu dem erfindungsgemä-ßen Hohlraumformteil bei einhergehender dauerhafter Verbindung des Trägermaterials mit dem Abdeckmaterial auszubilden. Hierdurch kann der Hohlraum in besonderem Maße an das gewünschte Anforderungsprofil, beispielsweise zur Gewährleistung einer besonders guten anatomischen Formgebung, angepaßt werden. Dabei ist es insbesondere möglich, eine exakte Positionierung des Hohlraums innerhalb des erfindungsgemäßen Hohlraumformteils zu ermöglichen, beispielsweise im Sitz- bzw. Lehnenbereiches eines Sitzmöbels. Ein nachträgliches "Verrutschen" des Hohlraums ist zudem ausgeschlossen.

Zudem ist es möglich, daß das erfindungsgemäße Hohlraumformteil mit besonders stark und unterschiedlich voneinander ausgeformten Bereichen ausgestattet werden kann, ohne daß beispielsweise das gegebenenfalls aufgebrachte textile Flächenmaterial delaminiert oder Falten wirft bzw. den Hohlraum dauerhaft verformt. Zudem handelt es sich im Rahmen der vorliegenden Erfindung aufgrund der bevorzugten Verwendung eines bei Gebrauchstemperatur harten und vorzugsweise nichtgeschäumten und/oder thermoplastischen Trägers um formstabile, selbsttragende Formteile, die hohen Belastungen standhalten können, wie sie insbesondere bei der Verwendung im Zusammenhang mit Sitzmöbeln auftreten.

Im Rahmen der vorliegenden Erfindung wird unter dem Begriff "dreidimensional" (dreidimensionales Hohlraumformteil) eine derartige Struktur verstanden, die von der ebenen bzw. planaren Struktur abweichende ausgeformte bzw. räumliche Bereiche aufweist, zu denen beispielsweise und in nichtbeschränkender Weise Ein- bzw. Auswölbungen, Vertiefungen, Biegungen und dergleichen zu zählen sind.

Weiterhin wird erfindungsgemäß unter dem Begriff "plattenförmig" (z. B. plattenförmiges Trägermaterial) eine zumindest im wesentlichen ebene bzw. planare Form verstanden, wobei die Dicke des Materials zumindest im wesentlichen über seine Fläche konstant ist. Sofern anwendungsbezogen erwünscht, können die einzelnen Schichten flächenbezogen jedoch auch unterschiedliche Dicken aufweisen, beispielsweise um eine weiter optimierte anatomische Form bei Sitzmöbeln zu realisieren.

Unter dem Begriff "Hohlraum" (z. B. ein zwischen dem Trägermaterial und dem Abdeckmaterial angeordneter Hohlraum) derart zu verstehen, daß das Trägermaterial und das Abdeckmaterial des erfindungsgemäßen dreidimensionalen Hohlraumformteils derart angeordnet bzw. verbunden bzw. geformt sind, daß sie den resultierenden Hohlraum zumindest im wesentlichen vollständig umschließen, wobei es erfindungsgemäß vorzugsweise vorgesehen ist, daß der Hohlraum allseitig von dem Trägermaterial und dem Abdeckmaterial abgegrenzt bzw. umgeben ist, so daß ein abgeschlossener Hohlraum resultiert. Erfindungsgemäß ist der Hohlraum durch Auswahl des entsprechenden Füllmediums bzw. durch Auswahl der den Hohlraum abgrenzenden Materialien reversibel verformbar bzw. komprimierbar. Erfindungsgemäß kann es vorgesehen sein, daß das dreidimensionale Hohlraumformteil eine Mehr- bzw. Vielzahl von Hohlräumen, d. h. beispielsweise zwei, drei, vier oder mehr Hohlräume, aufweist, wobei es vorgesehen sein kann, daß die Hohlräume beispielsweise durch Kanäle, Durchbrechungen oder dergleichen miteinander verbunden sind. Der Begriff "Hohlraum" umfaßt zudem einen mit Füllstoffen ausgefüllten oder teilweise befüllten (Hohl-)Raum. Die Befüllung des Hohlraums mit mindestens einem Füllstoff erfolgt dabei vorzugsweise während der Herstellung des dreidimensionalen Hohlraumformteils nach der Erfindung im Rahmen der Umformung des Trägermaterials und/oder des Abdeckmaterials, wobei - wie nachfolgend noch ausführlich geschildert - eine Druckbeaufschlagung während der Herstellung des dreidimensionalen Hohlraumformteils, vorzugsweise mit dem Füllstoff, bzw. ein Befüllen mit Füllstoffen während oder nach der Herstellung des dreidimensionalen Hohlraumformteils erfolgen kann.

Der Ausdruck "zugeordnet" bzw. "angeordnet" (z. B. ein der undurchlässigen folienartigen Schicht zugeordnetes textiles Flächenmaterial bzw. ein dem Träger zugeordnetes Flächenmaterial) ist erfindungsgemäß derart zu verstehen, daß einerseits die Möglichkeit besteht, daß das textile Flächenmaterial unmittelbar, d. h. direkt auf der undurchlässigen folienartigen Schicht bzw. dem Träger ,auflaminiert ist, andererseits kann sich dieser Begriff gleichermaßen auf eine mittelbare Zuordnung des textilen Flächenmaterials in bezug auf die Trägerschicht umfassen, bei welcher beispielsweise zwischen dem Flächenmaterial und der Trägerschicht mindestens eine weitere Zwischenschicht, beispielsweise eine Schaumstoffschicht, angeordnet ist.

Weiterhin ist der Begriff "formstabil" (z. B. formstabiler Träger) erfindungsgemäß so zu verstehen, daß das resultierende dreidimensionale Hohlraumformteil nach der Erfindung den bei der jeweiligen Anwendung, beispielsweise im Rahmen der Herstellung von Sitzmöbeln, resultierenden Belastungen widerstehen kann bzw. diese aufzunehmen imstande ist, wobei eine reversible Verformung von dieser Definition umfaßt ist.

Im Rahmen der vorliegenden Erfindung ist der Begriff "umformbar" (z. B. umformbarer Träger) so zu verstehen, daß der Träger bzw. das umzuformende unter Beibehaltung der Masse zumindest im wesentlichen irreversibel in eine andere Form bzw. Struktur überführt werden kann.

In diesem Zusammenhang ist der Begriff "thermoformbar" (z. B. thermoformbarer Träger) so zu verstehen, daß beispielsweise das zur Herstellung des dreidimensionalen Hohlraumformteils verwendete Trägermaterial unter Erwärmung auf einen Temperaturbereich oberhalb des Erweichungspunktes, insbesondere mittels Warmformen, umgeformt werden kann.

Schließlich ist unter dem Begriff "Auflaminieren" bzw. "Laminieren" (z. B. Auflaminieren des Flächenmaterials auf eine andere Schicht) ein insbesondere flächiges Verbinden bzw. Verkleben der jeweiligen Schichten des erfindungsgemäßen dreidimensionalen Hohlraumformteils zu verstehen, wobei das Verbinden der einzelnen Schichten beispielsweise mittels dem Fachmann wohlbekannter Verfahren, insbesondere Kaschierverfahren, im allgemeinen mittels geeigneter Laminier- bzw. Kaschiermittel, wie Klebstoffe, Schmelzklebstoffe, Schmelzkleberwebs und dergleichen erfolgen kann. In diesem Zusammenhang sollte die flächige Verbindung bzw. Laminierung oder Kaschierung der einzelnen Schichten vorzugsweise vollflächig erfolgen, d. h. das Kaschiermittel ist vorzugsweise kontinuierlich aufgetragen. Gleichermaßen ist jedoch auch eine kontinuierliche Verbindung möglich, beispielsweise durch einen punktförmigen oder rasterförmigen Auftrag des Klebstoffs. Gemäß einer besonderen Ausgestaltung der vorliegenden Erfindung können die jeweiligen Schichten des erfindungsgemäßen dreidimensionalen Hohlraumformteils durch die dem Fachmann an sich bekannte Flammkaschierverfahren miteinander verbunden werden, wobei insbesondere gewährleistet sein sollte, daß zumindest eine Schicht über hitzeklebrige Eigenschaften verfügt.

Weitere Vorteile, Merkmale, Eigenschaften und Aspekte der vorliegenden Erfindung ergeben sich aus der nachfolgenden Beschreibung einer bevorzugten Ausführungsform anhand der Figuren. Es zeigt:
- Fig. 1: einen schematischen Querschnitt des erfindungsgemäßen dreidimensionalen Hohlraumformteils gemäß einer erfindungsgemäß bevorzugten Ausführungsform
- Fig. 2: eine schematische Darstellung eines erfindungsgemäßen Sitzmöbels, welches unter Verwendung des erfindungsgemäßren dreidimensionalen Hohlraumformteils hergestellt ist;
- Fig. 3: eine schematische Darstellung eines erfindungsgemäßen Verfahrensablaufs zur Herstellung des dreidimensionalen Hohlraumformteils nach der Erfindung mit den jeweiligen Verfahrensschritten (Fig. 3A) bis Fig. 3C))

In den Figuren werden für gleiche oder ähnliche Teile dieselben Bezugszeichen verwendet, wobei entsprechende Eigenschaften und Vorteile erreicht werden, auch wenn eine wiederholte Beschreibung aus Vereinfachungsgründen weggelassen ist.

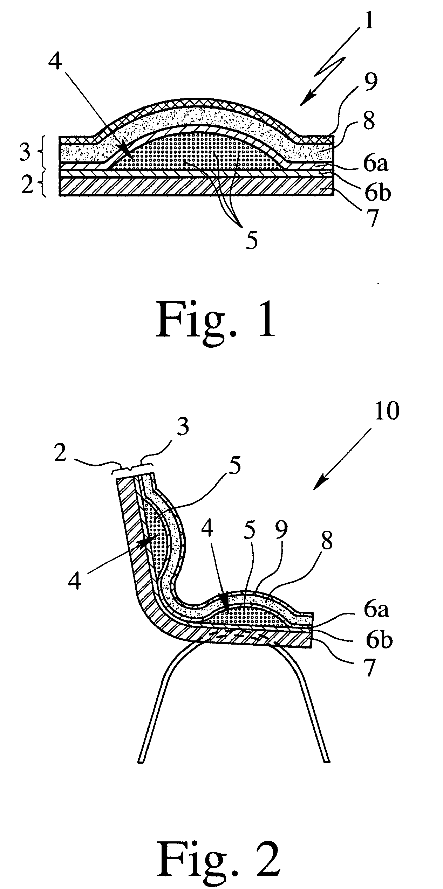

Fig. 1 zeigt ein erfindungsgemäßes dreidimensionales Hohlraumformteil 1 mit mehrschichtigem Aufbau, welches insbesondere für die Herstellung von Einrichtungsgegenständen, insbesondere Möbeln, vorzugsweise Sitzmöbeln, dekorativen Elementen, Hohlraumkanälen, Automobilzubehör und dergleichen geeignet ist. Erfindungsgemäß weist das Hohlraumformteil 1 mindestens einen von einem Trägermaterial 2 und einem Abdeckmaterial 3 gebildeten Hohlraum 4 auf, wobei der Hohlraum 4 zwischen dem Trägermaterial 2 und dem Abdeckmaterial 3 angeordnet und von diesen Materialien 2, 3 begrenzt ist. Wie Fig. 1 weiter verdeutlicht, ist der Hohlraum 4 mit einem Füllmedium 5 ausgefüllt, wobei das Trägermaterial 2 und das Abdeckmaterial 3 gegenüber dem Füllmedium 5 zumindest im wesentlichen undurchlässig sind. Dies wird erfindungsgemäß dadurch erreicht, daß das Trägermaterial 2 und/oder das Abdeckmaterial 3, vorzugsweise mindestens das Abdeckmaterial 3, jeweils eine gegenüber dem Füllmedium 5 zumindest im wesentlichen undurchlässige folienartige Schicht 6a, 6b aufweist bzw. aufweisen. Mit anderen Worten ist es erfindungsgemäß vorgesehen, daß entweder das Trägermaterial 2 oder das Abdeckmaterial 3 bzw. gemäß einer erfindungsgemäß besonders bevorzugten Ausführung sowohl das Trägermaterial 2 als auch das Abdeckmaterial 3 jeweils eine folienartige Schicht 6a bzw. 6b aufweist bzw. aufweisen. Dabei ist es erfindungsgemäß bevorzugt, daß sich die folienartige Schicht 6a, 6b flächig in bezug auf das Trägermaterial 2 und/oder das Abdeckmaterial 3 erstreckt.

Die vorliegende Erfindung zeichnet sich dadurch aus, daß das Trägermaterial 2 und das Abdeckmaterial 3 derart miteinander dauerhaft verbunden bzw. laminiert sind, daß das dreidimensionales Hohlraumformteil 1 nach der Erfindung mit mindestens einem abgeschlossenen Hohlraum 4 resultiert, wobei es erfindungsgemäß bevorzugt ist, daß der abgeschlossene Hohlraum 4 von der folienartigen Schicht bzw. den folienartigen Schichten 6a, 6b abgegrenzt ist. Mit anderen Worten ist gemäß einer erfindungsgemäß besonders bevorzugten Ausführungsform die folienartige Schicht 6a mit der folienartigen Schicht 6b zumindest abschnittsweise verbunden bzw. auf die Schicht 6b auflaminiert.

Dies kann beispielsweise dadurch realisiert werden, daß das Trägermaterial 2 und das Abdeckmaterial 3 beispielsweise an deren Randbereichen miteinander verbunden sind, wobei es erfindungsgemäß gleichermaßen möglich ist, das Trägermaterial 2 und das Abdeckmaterial 3 in den von den Randbereichen verschiedenen Bereichen, wie beispielsweise den zentralen Bereichen des Trägermaterials 2 und des Abdeckmaterials 3 insbesondere stegförmig miteinander zu verbinden, wodurch mehrere Hohlräume 4 realisierbar sind. Dabei kann es erfindungsgemäß vorgesehen sein, daß die insbesondere stegförmige Verbindung gleichermaßen Unterbrechungen bzw. Durchlässe und/oder Kanäle aufweist, um eine Verbindung von mehreren Hohlräumen 4 zu ermöglichen. Was die Anzahl der Hohlräume 4 in bezug auf das erfindungsgemäße dreidimensionale Hohlraumformteil 1 anbelangt, so ist diese nicht beschränkt. So kann das erfindungsgemäße dreidimensionale Hohlraumformteil 1 zwei, drei, vier, fünf oder mehr Hohlräume 4 aufweisen.

Was das erfindungsgemäße Hohlraumformteil 1 anbelangt, so kann das Trägermaterial 2 und/oder das Abdeckmaterial 3 Wölbungen, Vertiefungen, Ausbuchtungen, Biegungen oder dergleichen aufweisen. Mit anderen Worten kann das Trägermaterial 2 bzw. das Abdeckmaterial 3 eine dreidimensionale Form aufweisen, so daß insgesamt auch eine dreidimensionale Form in bezug auf das erfindungsgemäße Hohlraumformteil 1 resultieren kann. Durch die hohe Variabilität der dreidimensionalen Formgebung individuelle dreidimensionale Formen bzw. Strukturen hergestellt werden, so daß eine große Anzahl an verschiedenen Produkten auf Basis des dreidimensionalen Hohlraumformteils 1, insbesondere im Rahmen der Herstellung von Möbeln, wie Sitzmöbeln, resultiert. Dabei ist das erfindungsgemäße Hohlraumformteil 1 formstabil im Sinne der vorgenannten Definition, wobei jedoch - wie zuvor angesprochen - insbesondere eine reversible Verformung insbesondere des Hohlraums 4 einhergehend mit der Verformung mindestens eines Teils der daran angrenzenden Schichten vorgesehen ist.

Das erfindungsgemäße Hohlraumformteil 1 zeichnet sich insbesondere dadurch aus, daß das Trägermaterial 2 und/oder das Abdeckmaterial 3 einen mehrschichtigen Aufbau aufweisen kann bzw. können.

So kann es erfindungsgemäß vorgesehen sein, daß das Trägermaterial 2 einen Träger 7 aufweist oder hieraus besteht. Der Träger 7 des Hohlraumformteils 1 nach der Erfindung ist dabei vorzugsweise nichtporös bzw. nichtgeschäumt ausgebildet. Zudem kann es erfindungsgemäß vorgesehen sein, daß das Material für den Träger 7 ein thermoplastisches, insbesondere hitzeklebriges Material ist bzw. daß das Material für den Träger 7 ein formstabiles Material, insbesondere Kunststoff, Holz, Metall, insbesondere Aluminium, ist. Mit anderen Worten ist der Träger 7 gemäß einer erfindungsgemäß besonders bevorzugten Ausführungsform massiv bzw. als solcher hohlraumfrei.

Im Rahmen der vorliegenden Erfindung kann das Material des Trägers 7 aus Polymeren bzw. Copolymeren ausgewählt sein. Diesbezüglich kommen vorzugsweise Polyolefine, Vinylpolymere, Polyamide, Polyester, Polycarbonate bzw. Polyurethane in Betracht. Gemäß einer erfindungsgemäß bevorzugten Ausführungsform umfaßt das Material des Trägers 7 Polyolefine, insbesondere Polyethylen oder Polypropylen, besonders bevorzugt Polypropylencopolymerisate, oder aber Acrylnitril/Butadien/Styrol-Copolymerisate (ABS-Copolymerisate). Für weitere Einzelheiten in bezug auf Thermoplaste kann verwiesen werden auf Römpp Chemielexikon, 10. Auflage, Band 6, 1999, Georg Thieme Verlag, Stuttgart/New York, Seiten 4505/4506, Stichwort: "Thermoplaste", wobei der gesamter Offenbarungsgehalt einschließlich der dort genannten Literaturstellen hiermit durch Bezugnahme eingeschlossen ist.

Gleichermaßen können im Rahmen der vorliegenden Erfindung auch sogenannte thermoplastische Elastomere für den Träger 7 verwendet werden, welche eine Kombination der Gebrauchseigenschaften von Elastomeren und der Verarbeitungseigenschaften von Thermoplasten aufweisen. Für weitere diesbezügliche Einzelheiten kann gleichermaßen verwiesen werden auf Römpp Chemielexikon, 10. Auflage, Band 6, 1999, Georg Thieme Verlag, Stuttgart/New York, Seiten 4506/4507, Stichwort: "Thermoplastische Elastomere", wobei der gesamte Offenbarungsgehalt einschließlich der darin genannten Literaturstellen hiermit durch Bezugnahme eingeschlossen ist.

Erfindungsgemäß werden für den optionalen Träger 7 besonders bevorzugt solche Materialien bzw. Thermoplaste eingesetzt, welche eine Streckspannung gemäß ISO 527 von 5 bis 10 N/mm², vorzugsweise 10 bis 45 N/mm², bevorzugt 15 bis 40 N/mm², besonders bevorzugt 20 bis 35 N/mm², aufweisen. Gleichermaßen sollte das Material des Trägers 7a bzw. 7b eine Dehnung bei Streckspannung gemäß ISO 527 von weniger als 20 %, vorzugsweise weniger als 16 %, bevorzugt weniger als 12 %, aufweisen. Das Material des Trägers 7a bzw. 7b sollte zudem eine Reißfestigkeit gemäß ISO 527 von mindestens 15 N/mm², vorzugsweise mindestens 20 N/mm², bevorzugt mindestens 25 N/mm², aufweisen und/oder eine Reißdehnung gemäß ISO 527 von 5 bis 700 % und einen Elastizitätsmodul gemäß Vier-Punkt-Biegeprüfung nach ISO 178 von 500 bis 2.200 N/mm², vorzugsweise 700 bis 2.100 N/mm², bevorzugt 900 bis 1.900 N/mm², aufweisen.

Was das Material des optionalen Trägers 7 weiterhin anbelangt, so kann dieses bei 23 °C ohne Bruch schlagzäh (Schlagzähigkeit nach Charpy gemäß EN ISO 179/leU) sein bzw. eine Schlagzähigkeit nach Charpy gemäß EN ISO 179/1eU bei -30 °C von mindestens 40 kJ/m², vorzugsweise mindestens 50 kJ/m², bevorzugt mindestens 60 kJ/m², besonders bevorzugt mindestens 70 kJ/m², aufweisen. Weiterhin kann das Material des Trägers 7 eine Kerbschlagzähigkeit gemäß EN ISO 179/1eA bei 23 °C von mindestens 15 kJ/m², vorzugsweise mindestens 25 kJ/m², bevorzugt mindestens 35 kJ/m², aufweisen. Weiterhin kann das Material des Trägers 7a bzw. 7b eine Kerbschlagzähigkeit gemäß EN ISO 179/1eA bei -30 °C von mindestens 1 kJ/m², vorzugsweise mindestens 2 kJ/m², bevorzugt mindestens 3 kJ/m², aufweisen und weiterhin eine Kugeldruckhärte (H358/30) gemäß EN ISO 2039-1 von mindestens 50 N/mm², vorzugsweise mindestens 60 N/mm², bevorzugt mindestens 70 N/mm², aufweisen. Schließlich sollte das Material des Trägers 7 eine Dichte von 0,8 bis 1,5 g/cm³, insbesondere 0,85 bis 1,4 g/cm³, vorzugsweise 0,9 bis 1,3 g/cm³, aufweisen. Schließlich sollte das Material des Trägers 7 eine Vicat-Erweichungstemperatur (VST A 120 bzw. VST B 50) gemäß ISO 306 von 80 °C bis 200 °C, vorzugsweise 85 °C bis 180°C, bevorzugt 90 °C bis 160°C, aufweisen.

Für den Träger 7 geeignete Materialien sind beispielsweise Metzo^{®}Plast PP/C bzw. Metzo^{®}Plast ABS/M der Metzeler Plastics GmbH, Jülich, Deutschland.

Die Dicke des thermoplastischen Materials bzw. des Trägers 7 kann in weiten Bereich variieren. Erfindungsgemäß bevorzugt kann der Träger 7 eine Dicke von 1 mm bis 20 mm, vorzugsweise 1,5 mm bis 5 mm, bevorzugt 2 mm bis 10 mm, besonders bevorzugt 2,5 mm bis 7 mm, ganz besonders bevorzugt 3 mm bis 5 mm, aufweisen. Allerdings kann von diesen Werten anwendungsbezogen oder einzelfallbedingt abgewichen werden, beispielsweise wenn die Formteile 2a bzw. 2b im Rahmen einer erfindungsgemäßen Baueinheit 1 beispielsweise zur Herstellung von besonders belastbaren Möbeln bzw. Sitzmöbeln verwendet werden soll, wobei die Dicke des Trägers 7 dann 15 mm deutlich übersteigen kann.

Wie Fig. 1 zu entnehmen ist, ist der Träger 7 vorzugsweise ein Bestandteil der Trägerschicht 2, wobei es erfindungsgemäß gleichermaßen vorgesehen sein kann, daß die Trägerschicht durch den Träger 7 gebildet ist. In diesem Fall sollte der Träger 7 vorzugsweise als solcher gegenüber dem Füllmedium 5 des Hohlraums 4 zumindest im wesentlichen undurchlässig sein.

Gemäß einer erfindungsgemäß besonders bevorzugten Ausführungsform weist das Trägermaterial 2 eine in Fig. 1 beispielhaft veranschaulichte 2-Schichtstruktur auf, welche neben dem Träger 7 zusätzlich die folienartige Schicht 6b aufweist, welche vorzugsweise auf der zum Hohlraum 4 zugewandten Seite des Trägers 7 aufgebracht bzw. auf diese laminiert ist.

Die vorliegende Erfindung ist jedoch nicht auf eine derartige 2-Schichtstruktur beschränkt. So kann es erfindungsgemäß vorgesehen sein, daß das Trägermaterial 2 weitere Schichten umfaßt, beispielsweise ein zusätzliches, auf der dem Hohlraum 4 abgewandten Seite des Trägers 7 aufgebrachtes bzw. auflaminiertes textiles Flächenmaterial im Sinne der nachfolgenden Definition aufweisen, was zu weiter verbesserten optischen bzw. haptischen Eigenschaften der Oberfläche des dreidimensionalen Hohlraumformteils 1 nach der Erfindung führt.

Wie Fig. 1 weiter zu entnehmen ist, weist das Trägermaterial 2 bzw. das Abdeckmaterial 3 jeweils eine folienartige Schicht 6a, 6b auf, welche gewissermaßen die Abgrenzung bzw. Abdichtung des Hohlraums 4 darstellt, so daß auf diese Weise ein Austreten des in dem Hohlraum 4 befindlichen Füllmediums 5 verhindert wird.

Was die folienartige Schicht 6a, 6b als solche betrifft, so kann diese ausgewählt sein aus Polyurethanen, Polyolefinen, insbesondere Polyethylen oder Polypropylen, Polyethern, Polyestern, Polyetherestern, Polyimiden und Polytetrafluorethylen. Was die Dicke der folienartigen Schicht 6a, 6b anbelangt, so kann diese in weiten Bereichen variieren. Erfindungsgemäß kann es vorgesehen sein, daß die folienartige Schicht 6a, 6b eine Dicke von 20 mm bis 100 µm, insbesondere 10 mm bis 200 µm, vorzugsweise 5 mm bis 50 µm, aufweisen. Anwendungsbezogen oder einzelfallbedingt kann von diesen Werten jedoch abgewichen werden.

Weiterhin ist es erfindungsgemäß bevorzugt, daß die folienartige Schicht 6a, 6b elastisch, reißfest bzw. flexibel ist. Weiterhin sollte die folienartige Schicht 6a, 6b dehnbar, vorzugsweise reversibel dehnbar, sein. Diesbezüglich sollte die folienartige Schicht 6a, 6b eine Dehnbarkeit in mindestens eine Richtung, vorzugsweise in Quer- und Längsrichtung, von mindestens 5 %, insbesondere mindestens 10 %, bevorzugt mindestens 15 %, aufweisen. Aufgrund der vorgenannten spezifischen Eigenschaften der folienartigen Schicht 6a, 6b wird insbesondere gewährleistet, daß der das Füllmedium 5 enthaltende Hohlraum 4 während einer kraftmäßigen Beanspruchung bzw. Druckbeanspruchung, beispielsweise im Rahmen einer Sitzbeanspruchung im Falle von Sitzmöbeln, eine reversible Formveränderung erfahren kann, was zu einer besonders guten anatomischen Anpassung in bezug auf den Anwender führt.

Wie Fig. 1 zu entnehmen ist, kann die folienartige Schicht 6a, 6b gemäß einer erfindungsgemäß besonders bevorzugten Ausführungsform dem Trägermaterial 2 und/oder dem Abdeckmaterial 3 zugeordnet sein derart, daß die folienartige Schicht 6a, 6b dem Hohlraum 4 zugewandt ist. Dabei ist es erfindungsgemäß vorgesehen, daß die folienartige Schicht 6a, 6b mit den angrenzenden Schichten des Trägermaterials 2 bzw. des Abdeckmaterials 3, beispielsweise mit dem Träger 7 des Trägermaterials 2, beispielsweise durch Auflaminieren dauerhaft verbunden ist. Gleichermaßen kann das dauerhafte Verbinden des Trägermaterials 2 einerseits und des Abdeckmaterials 3 andererseits durch Auflaminieren dieser Materialien 2, 3 erfolgen, wie in Fig. 1 dargestellt ist.

Gemäß einer erfindungsgemäß besonders bevorzugten Ausführungsform ist die folienartige Schicht 6a, 6b auf dem Trägermaterial 2 bzw. dem Abdeckmaterial 3 angeordnet derart, daß die folienartige Schicht 6a, 6b den Hohlraum 4 abgrenzt.

Fig. 1 zeigt ein erfindungsgemäß besonders bevorzugtes Ausführungsbeispiel, wonach sowohl das Trägermaterial 2 als auch das Abdeckmaterial 3 mit einer zu dem Hohlraum 4 zugewandten folienartigen Schicht 6a, 6b ausgestattet ist. Die folienartige Schicht 6a, 6b kann auf der ihr zugeordneten Schicht, beispielsweise auf den Träger 7 in bezug auf das Trägermaterial 2 bzw. auf eine Schaumstoffschicht 8 oder auf ein textiles Flächenmaterial 9 in bezug auf das Abdeckmaterial 3, auflaminiert sein.

Wie Fig. 1 weiter zu entnehmen ist, sind gemäß der Ausführungsform mit zwei folienartigen Schichten 6a, 6b diese an in bezug auf den Hohlraum 4 angrenzenden Randbereichen miteinander verbunden, insbesondere laminiert, so daß insgesamt ein Mehrschichtmaterial mit dem Trägermaterial 2 und dem Abdeckmaterial 3 und dem davon umschlossenen Hohlraum 4 mitsamt dem Füllmaterial 5 resultiert.

Die vorliegende Erfindung umfaßt gleichermaßen solche Ausführungsformen mit lediglich einer folienartigen Schicht (nicht dargestellt), beispielsweise einer dem Abdeckmaterial 3 zugeordneten folienartigen Schicht 6a. Eine derartige Ausgestaltung kommt insbesondere dann in Betracht, wenn der Träger 7 der Trägerschicht 2 als solcher Sperreigenschaften aufweist, d. h. gegenüber dem Füllmaterial 5 des Hohlraums 4 zumindest im wesentlichen undurchlässig ist. In diesem Falle resultiert eine mehrschichtige Struktur, welche das Trägermaterial 2 und das Abdeckmaterial 3 sowie den mit dem Füllmedium 5 gefüllten Hohlraum 4 umfaßt, durch eine Zuordnung bzw. ein Auflaminieren der folienartigen Schicht 6a auf den Träger 7.

Wie zuvor angeführt, kann das Trägermaterial 2 bzw. das Abdeckmaterial 3 weitere Schichten umfassen. So kann es beispielsweise vorgesehen sein, daß ein weiteres textiles Flächenmaterial dem Träger 7 zugeordnet ist, insbesondere auf der dem Hohlraum abgewandten Seite des Trägers 7, so daß auch in bezug auf die dem Abdeckmaterial 3 abgewandten Seite der Mehrschichtstruktur ansprechende optische und haptische Eigenschaften resultieren (nicht dargestellt).

Wie der Fig. 1 weiter zu entnehmen ist, kann es erfindungsgemäß vorgesehen sein, daß das Abdeckmaterial 3 eine vorzugsweise auf der dem Hohlraum 4 abgewandten Seite der folienartigen Schicht 6a angeordnete Schaumstoffschicht 8 aufweist. Diesbezüglich kann die Schaumstoffschicht 8 ein Schaumstoff, insbesondere auf Basis von Polyolefinen oder Polyurethanen, vorzugsweise Polyolefinen, sein. In diesem Zusammenhang kann es in bezug auf die Schaumstoffschicht 8 insbesondere vorgesehen sein, daß diese ein geschlossenporiger bzw. geschlossenzelliger Schaumstoff ist. Derartige Schaumstoffe weisen im allgemeinen eine geringere Komprimierbarkeit als offenporige Schäume auf, so daß bei Verwendung des erfindungsgemäßen Hohlraumformteils 1 eine optimale elastische und reversible Komprimierbarkeit unter Belastung vorliegt. So liegt - bei Verwendung in Sitzmöbeln - unter Beanspruchung bei einer Belastung ("Draufsetzen") eine Komprimierung des Schaumstoffs vor, so daß aufgrund der guten Anpassung an den Benutzer ein angenehmes und bequemes Sitzgefühl, insbesondere auch in den Bereichen des Hohlraumformteils, bei welchen die Schaumstoffschicht 8 nicht von dem Hohlraum unterlagert ist, resultiert, während nach Belastung ("Aufstehen") der Schaumstoff seine ursprüngliche Dicke wieder einzunehmen imstande ist.

Wie zuvor geschildert, ist die Schaumstoffschicht 8 vorzugsweise der folienartigen Schicht 6a zugeordnet, wobei es erfindungsgemäß vorgesehen sein kann, daß auch der folienartigen Schicht 6a abgewandten Seite der Schaumstoffschicht 8 ein textiles Flächenmaterial auflaminiert ist. Zu diesem Zweck kann die Schaumstoffschicht 8 ein insbesondere thermoplastischer bzw. insbesondere thermoplastisch verformbarer Schaumstoff, vorzugsweise auf Basis von Polyolefinen oder Polyurethanen, sein, wobei Schaumstoffe auf Basis von Polyolefinen erfindungsgemäß bevorzugt sind. Gleichermaßen kann erfindungsgemäß auch ein peroxidisch vernetzbarer Polyethylenschaum eingesetzt werden. Durch die spezielle Auswahl des Schaumstoffs wird das textile Flächenmaterial 9 in gewisser Weise unterstützt, so daß das erfindungsgemäße Hohlraumformteil 1 auch an den Bereichen fernab des Hohlraums 4 eine gewisse elastische und reversible Komprimierbarkeit bzw. Verformbarkeit unter Belastung aufweist. Was den Schaumstoff als solchen betrifft, so kann dieser gleichermaßen plastisch verformbar, insbesondere thermoverformbar bzw. thermoplastisch, sein, wobei die Erweichungstemperatur derart ausgewählt werden sollte, daß der Schaumstoff bei der Umformung des erfindungsgemä-ßen Hohlraumformteils zu Zwecken einer dreidimensionalen Formgebung nicht zerstört bzw. der Schaumstoff nicht zu stark komprimiert wird. Der Schaumstoff sollte zumindest derart beschaffen sein, daß er aufgrund seiner Elastizität bzw. Verformbarkeit in die gewünschte dreidimensionale Form gebracht werden kann.

Die Schaumstoffschicht 8 kann eine Dicke von 1 mm bis 50 mm, insbesondere 2 mm bis 40 mm, vorzugsweise 3 mm bis 30 mm, bevorzugt 4 mm bis 25 mm, besonders bevorzugt 5 mm bis 20 mm, aufweisen, wobei die Dicke - in Abhängigkeit von dem gewünschten Einsatzbereich - in weiten Bereichen variieren und gegebenenfalls von den angegebenen Bereichen abweichen kann.

Was die Rohdichte der Schaumstoffschicht 8 anbelangt, so kann diese 5 bis 250 kg/m³, insbesondere 10 bis 150 kg/m³, vorzugsweise 20 bis 100 kg/m³, bevorzugt 25 bis 95 kg/m³, betragen.

Was die Schaumstoffschicht 8 anbelangt, so kann es sich hierbei - wie bereits geschildert - um eine Schaumstoffschicht bzw. um eine Schicht aus einem geschäumten Material handeln. Das diesbezüglich verwendete Schaumstoffmaterial kann eine Zugfestigkeit in Quer- und/oder Längsrichtung gemäß ISO 1926 von 100 bis 1.500 kPa, insbesondere 150 bis 1.300 kPa, vorzugsweise 100 bis 1.100 kPa, aufweisen; mit anderen Worten sollte das Material für die Schaumstoffschicht 8 eine Zugfestigkeit gemäß der vorgenannten Norm in Längs- und/oder Querrichtung von mindestens 100 kPa, insbesondere mindestens 150 kPa, vorzugsweise mindestens 200 kPa, aufweisen.

Weiterhin sollte das Material für die Schaumstoffschicht 8 eine Bruchdehnung in Längs- und/oder Querrichtung gemäß ISO 1926 von 50 bis 350 %, insbesondere 65 bis 225 %, vorzugsweise 80 bis 300 %, aufweisen; mit anderen Worten sollte das Material für die Schaumstoffschicht 8 somit eine Bruchdehnung gemäß der vorgenannten Norm in Längs- bzw. Querrichtung von mindestens 50 %, insbesondere mindestens 65 %, vorzugsweise mindestens 80 %, aufweisen. Was die Stauchhärte gemäß ISO 844 des Materials für die Schaumstoffschicht 8 anbelangt, so sollte diese bei einer Stauchung von 10 % mindestens 5 kPa, insbesondere mindestens 10 kPa, vorzugsweise mindestens 15 kPa, bei einer Stauchung von 25 % mindestens 25 kPa, insbesondere mindestens 30 kPa, vorzugsweise mindestens 35 kPa, bei einer Stauchung von 50 % mindestens 85 kPa, insbesondere mindestens 90 kPa, vorzugsweise mindestens 95 kPa, betragen. Was die Druckverformungsresistenz gemäß ISO 1856/C bei einer Belastung von 22 Stunden und einer Stauchung von 25 % bei 23 °C betrifft, so sollte das Material der Schaumstoffschicht 8 0,5 Stunden nach Entlastung eine Druckverformungsresistenz von höchstens 30 %, insbesondere höchstens 25 %, vorzugsweise höchstens 20 %, und 24 Stunden nach Entlastung einen Wert von höchstens 20 %, insbesondere höchstens 15 %, vorzugsweise höchstens 10 %, aufweisen. Schließlich sollte das Material für die Schaumstoffschicht 8 einen Mikro-Wert gemäß ISO 1663 bei 0 bis 85 % relativer Feuchte und 23 °C von 3.000 bis 20.000, insbesondere 3.500 bis 19.000, vorzugsweise 4.000 bis 18.000, aufweisen.

Erfindungsgemäß bevorzugt können für die Schaumstoffschicht 8 die unter dem Handelsnahmen Alveolit^{®} und Alveolen^{®} vertriebenen Schaumstoffe der Alveo AG, Luzern, Schweiz eingesetzt werden.

Fig. 1 ist weiterhin zu entnehmen, daß das Abdeckmaterial 3 des erfindungsgemäßen Hohlraumformteils 1 ein vorzugsweise auf der dem Hohlraum 4 abgewandten Seite der folienartigen Schicht 6a angeordnetes textiles Flächenmaterial 9 aufweist. Mit anderen Worten bildet das textile Flächenmaterial 8 somit gewissermaßen die Oberfläche des Hohlraumformteils 1 nach der Erfindung.

Um die zuvor beschriebenen starken Umformungen bzw. Biegungen des erfindungsgemäßen Hohlraumformteils 1 realisieren zu können, sollte das textile Flächenmaterial 9 im allgemeinen dehnbar bzw. flexibel sein, um eine Delaminierung bzw. Faltenbildung in effektiver Weise zu verhindern. Zu diesem Zweck kann es sich bei dem textilen Flächenmaterial 9 vorzugsweise um ein Gewebe, Gewirke, Gestricke oder Gelege handeln. Gemäß einer erfindungsgemäß besonders bevorzugten Ausführungsform ist das textile Flächenmaterial 9 ein Gewebe. Darüber hinaus ist es jedoch gleichermaßen möglich, daß als Flächematerial 9 beispielsweise ein Leder oder ein Kunstleder eingesetzt wird. Gleichermaßen kommen als Flächenmaterial 9 auch folienartige Kunststoffe oder dünnwandige Metallfolien in Betracht. Insbesondere kann das Flächenmaterial 9 derart ausgewählt sein, daß es zumindest im wesentlichen lichtdicht ist.

Das Flächengewicht des textilen Flächenmaterials 9 kann in großen Bereichen variieren. So kann das textile Flächenmaterial 9 ein Flächengewicht von 25 bis 600 g/m², insbesondere 50 bis 500 g/m², vorzugsweise 100 bis 400 g/m², aufweisen. Zu den vorgenannten Zwecken zur Vermeidung einer vorzeitigen Delaminierung bzw. Faltenbildung und zur Ausbildung starker Biegungen bzw. Umformungen in bezug auf das erfindungsgemäße Hohlraumformteil 1 sollte das textile Flächenmaterial 9 reversibel dehnfähig und/oder insbesondere bielastisch, d. h. in beiden Richtungen dehnbar bzw. hochelastisch sein. Dabei kann das textile Flächenmaterial 9 eine Dehnbarkeit in mindestens eine Richtung, vorzugsweise in Längs- und Querrichtung und von mindestens 5 %, insbesondere mindestens 10 %, vorzugsweise mindestens 20 %, aufweisen.

Gemäß einer erfindungsgemäß besonders bevorzugten Ausführungsform wird als textiles Flächenmaterial 9 ein insbesondere bielastisches textiles Gewebe eingesetzt, welches beispielsweise eine Elastizität in Kettrichtung von etwa 35 % oder mehr und in Schußrichtung eine Elastizität von 20 % oder mehr aufweist.

Gemäß einer besonders bevorzugten Ausführungsform kann ein bielastisches Gewebe verwendet werden, welches ein Gewicht von 350 g/m² bei einer Elastizität in Kettrichtung von 35 % und einer Elastizität in Schußrichtung von 20 % aufweist. Ein derartiges Gewebe kann, bezogen auf das Gesamtgewicht des Gewebes, beispielsweise etwa 4,8 % Elastan^{®}, etwa 89,3 % Polyester und etwa 9,5 Polyamid umfassen. Erfindungsgemäß ist es gleichermaßen möglich, daß das textile Flächenmaterial 9 zusätzlich imprägniert, beschichtet oder dergleichen ist, um das Flächenmaterial 9 beispielsweise flammhemmend auszurüsten bzw. um die Schmutzabweisung zu erhöhen.

Erfindungsgemäß kann das textile Flächenmaterial 9 mittels eines Laminier- und/oder Kaschiermittels, insbesondere eines Klebstoffs, auf die dem textilen Flächenmaterial 9 zugeordnete Schicht, beispielsweise die Schaumstoffschicht oder die folienartige Schicht 6a bzw. in bezug auf das Trägermaterial 2 den Träger 7, auflaminiert sein.

Was den insbesondere durch die folienartige Schicht 6a, 6b umschlossenen Hohlraum 4 anbelangt, so ist es erfindungsgemäß vorgesehen, daß dieser mit einem Füllmedium 5 teilweise oder zumindest im wesentlichen vollständig ausgefüllt ist, wie Fig. 1 und Fig. 2 zeigt. In diesem Zusammenhang kann das Füllmaterial 5 ausgewählt sein aus der Gruppe von Gasen, insbesondere Luft oder Stickstoff, Flüssigkeiten, Gelen, insbesondere niedrigviskosen, mittelviskosen oder hochviskosen Gelen, und festen Stoffen, wie Schäumen und Schaumstoffen, insbesondere Polystyrol-, Polyurethan- oder Polyolefinschaumstoffen. Bei dem zur Ausfüllung des Hohlraums 4 kann es sich gleichermaßen um einen Mehrkomponentenschaumstoff handeln. Diesbezüglich kommen neben den zuvor genannten geschlossenporigen Schaumstoffen auch offenporige Schaumstoffe in Betracht. Das Aus- bzw. Auffüllen des Hohlraums 4 mit dem Füllmaterial 5 kann beispielsweise - wie nachfolgend im Rahmen des erfindungsgemäßen Verfahrens noch geschildert - während der Herstellung des erfindungsgemäßen Hohlraumformteils erfolgen, wobei das Füllmaterial 5 zwischen dem Trägermaterial 2 und dem Abdeckmaterial 3, beispielsweise durch Kanäle bzw. Öffnungen bzw. durch den aufgrund der im Rahmen der Herstellung des erfindungsgemäßen Hohlraumformteils 1 gegebenenfalls vorgesehenen Beabstandung des Trägermaterials 2 und zum Abdeckmaterial 3 hervorgerufenen Spalt in den Hohlraum 4 unter dessen Ausbildung eingebracht werden bzw. diesen durch Druckbeaufschlagung beim Einführen des Füllmediums 5 ausbilden.

Was die erfindungsgemäß verwendbaren Füllmaterialien 5 in fester Form, wie die zuvor genannten Schaumstoffe anbelangt, so können diese beispielsweise in flüssiger, nichtvernetzter Form in den Hohlraum 4 eingebracht sein, wobei eine Vernetzung bzw. Aushärtung gegebenenfalls einschließlich einer Aufschäumung im Hohlraum 4 selbst stattfindet. Hierzu kommen z. B. Mehrkomponentenschäume in Betracht. Gleichermaßen ist es aber auch möglich, daß die festen Füllmaterialien 5 in zerkleinerter Form, beispielsweise in Form von Schaumstoffkügelchen, in den Hohlraum 4 eingebracht sind. Im allgemeinen sollten die verwendeten Füllmaterialien reversibel verformbar bzw. reversibel komprimierbar sein, wobei aufgrund der Eigenelastizität der verwendeten Materialien eine optimierte anatomische Anpassung beispielsweise an den Benutzer eines Sitzmöbels erfolgt, so daß beispielsweise bei der Verwendung des erfindungsgemäßen dreidimensionalen Hohlraumformteils 1 als Sitzmöbel mit einem Sitz- und/oder Rückenteil, wie in Fig. 2 dargestellt, eine verbesserte Anpassung an die Körperform resultiert.

Zudem sollte das verwendete Füllmaterial 5 derart ausgewählt sein, daß bei einer kraftmäßigen Entlastung des erfindungsgemäßen Hohlraumformteils 1 (z. B. "Aufstehen") dieses zumindest im wesentlichen ihre ursprüngliche Form bzw. Struktur einzunehmen imstande ist.

Was das erfindungsgemäße Hohlraumformteil 1 weiterhin anbelangt, so können die jeweiligen Schichten 6b, 7 des Trägermaterials 2 und/oder die jeweiligen Schichten 6a, 8, 9 des Abdeckmaterials 3 insbesondere mittels eines Laminiermittels bzw. aufgrund der Eigenklebrigkeit, insbesondere Hitzeklebrigkeit, zumindest eines Teils der jeweiligen Schichten 6b, 7 und/oder der jeweiligen Schichten 6a, 8, 9 miteinander verbunden bzw. aufeinander laminiert sein.

Weiterhin kann es erfindungsgemäß vorgesehen sein, daß das Trägermaterial 2 und das Abdeckmaterial 3 derart verbunden sind, daß der Hohlraum 4 vom Trägermaterial 2 und Abdeckmaterial 3 vollständig umschlossen ist, so daß auf diese Weise gewissermaßen ein abgeschlossener bzw. vollständig abgedichteter Hohlraum 4 resultiert, aus dem das Füllmaterial 5 nicht mehr austreten kann.

Dabei kann es in bezug auf das fertiggestellte Hohlraumformteil 1 nach der Erfindung vorgesehen sein, daß das Abdeckmaterial 3 mit Ausnahme des Bereiches des Hohlraumes 4 auf das Trägermaterial 2 auflaminiert ist. In diesem Falle stehen somit die dem Hohlraum 4 zugeordneten Schichten des Trägermaterials 2 bzw. des Abdeckmaterials 3 miteinander in Verbindung. Sofern - gemäß einer erfindungsgemäß besonders bevorzugten Ausführungsform - das erfindungsgemäße Hohlraumformteil 1 zwei folienartige Schichten 6a, 6b aufweist, ist es erfindungsgemäß vorgesehen, daß der Hohlraum 4 von der folienartigen Schicht 6a der Abdeckschicht 3 und der folienartigen Schicht 6b der Trägerschicht 2 umschlossen ist, so daß in diesem erfindungsgemäß bevorzugten Fall die folienartige Schicht an den entsprechenden Kontaktstellen auf die folienartige Schicht 6b auflaminiert ist.

Gemäß einer erfindungsgemäß bevorzugten Ausführungsform weist - wie in Fig. 1 und Fig. 2 dargestellt - das Trägermaterial 2 des erfindungsgemäßen Hohlraumformteils 1 eine den Hohlraum 4 abgrenzende, gegenüber dem Füllmedium 5 zumindest im wesentlichen undurchlässige folienartige Schicht 6b, insbesondere wie zuvor definiert, und einen auf der dem Hohlraum 4 abgewandten Seite der folienartigen Schicht 6b angeordneten Träger 7, insbesondere wie zuvor definiert, auf. Zudem umfaßt das Abdeckmaterial 3 gemäß dieser erfindungsgemäß besonders bevorzugten Ausführungsform eine den Hohlraum 4 abgrenzende, gegenüber dem Füllmedium 5 zumindest im wesentlichen undurchlässige folienartige Schicht 6a, insbesondere wie zuvor definiert und eine auf der dem Hohlraum 4 abgewandten Seite der folienartigen Schicht 6b angeordneten Schaumstoffschicht 8, insbesondere wie zuvor definiert, und eine auf der der folienartigen Schicht 6a abgewandten Seite der Schaumstoffschicht 8 angeordnetes textiles Flächenmaterial 9, insbesondere wie zuvor definiert.

Was die Dimensionierung der Schichten anbelangt, so können die jeweiligen Schichten 6b, 7 bzw. 6a, 8, 9 flächenbezogen gleiche Ausmaße aufweisen, so daß die Schichten gewissermaßen deckungsgleich in bezug auf das erfindungsgemäße Hohlraumformteil 1 angeordnet sind.

Gemäß einer besonderen, in den Figurendarstellungen nicht dargestellten Ausführungsform kann der Hohlraum 4 eine vorzugsweise verschließbare Öffnung, insbesondere ein Ventil, zum bedarfsweisen (Nach-)Füllen des Hohlraums 4 mit Füllmedium 5 und/oder zum bedarfsweisen Ablassen von Füllmedium 5 aus dem Hohlraum aufweisen. Auf diese Weise läßt sich beispielsweise bei der Verwendung des Hohlraumformteils 1 als Sitzmöbel das Volumen bzw. die "Härte/Weichheit" des Hohlraums 4 und auf diese Weise der Sitzkomfort gezielt und effizient und anforderungsgerecht steuern.

Die vorliegende Erfindung zeichnet sich dadurch aus, daß ein erfindungsgemäßes Hohlraumformteil bereitgestellt wird, welches bereits als solches sämtliche Schichten aufweist, so daß keine nachträglichen Schichten aufgebracht werden müssen. Durch die spezielle Auswahl der vorgenannten Schichten können in bezug auf das Hohlraumformteil 1 starke bzw. besonders ausgeprägte dreidimensionale Strukturen realisiert werden, so daß sich das dreidimensionale Hohlraumformteil 1 nach der Erfindung für eine große Anzahl von Anwendungen eignet, da eine individuelle Anpassung möglich ist. Durch die gezielte Verwendung der folienartigen Schichten 6a, 6b ist zudem erfindungsgemäß gewährleistet, daß der Hohlraum 4 mit dem sich darin befindlichen Füllmedium 5 zumindest im wesentlichen vollständig abgedichtet ist, so daß ein abgeschlossener Hohlraum 4 resultiert, aus dem das Füllmaterial 5 auch unter starker Belastung nicht entweichen kann. Zudem wird durch das Auflaminieren der jeweiligen Schichten eine hohe Stabilität des erfindungsgemäßen Hohlraumformteils erreicht, so daß auch unter starken Belastungen keine Delaminierungen auftreten.

Was das erfindungsgemäße Hohlraumformteil 1 betrifft, so liegt dieses gewissermaßen in einer für den jeweiligen Anwendungszweck geeigneten Endform vor und kann somit unmittelbar für Einrichtungsgegenstände, wie Möbel (z. B. Sitzmöbel), dekorative Elemente, Hohlraumkanäle und dergleichen, beispielsweise als Formelement einer Unter- bzw. Rückseite eines Sitz- oder Rückenteils oder als vollständige Sitzschale eines Sitzmöbels verwendet werden. Hierzu kann das erfindungsgemäße Hohlraumformteil zusätzlich mit statischen Elementen (d. h. Stützen, Halterungen, Verbindungselementen, Gestängen, Stuhlbeinen etc.) ausgerüstet sein, wie es in Fig. 2 exemplarisch dargestellt ist. Diesbezüglich können Halte- bzw. Fixierpunkte für die vorgenannten Elemente, beispielsweise mittels Bohrungen, in das erfindungsgemäße Hohlraumformteil 1 eingebracht sein.

Weiterhin betrifft die vorliegende Erfindung - gemäß einem weiteren Aspekt der vorliegenden Erfindung - die Verwendung des erfindungsgemäßen dreidimensionalen Hohlraumformteils 1, insbesondere wie zuvor definiert, zur Herstellung von Einrichtungsgegenständen, wie Möbeln, insbesondere Sitzmöbeln, dekorativen Elemente, wie Trennwänden und dergleichen, Hohlraumkanälen und dergleichen, Automobilzubehör und dergleichen. Besonders bevorzugt kann das erfindungsgemäße Hohlraumformteil für Sitzmöbel und dergleichen verwendet werden, wobei der Begriff "Sitzmöbel" sehr breit zu verstehen ist und Sitzgelegenheiten bzw. Sitzelemente aller Art, wie - beispielsweise und in nichtbeschränkender Weise - Bänke, Stühle, Sessel, Sofas, Couchgarnituren, Hocker und dergleichen, betrifft. Dabei kann das Sitzmöbel der Gestalt sein, daß es aus einem erfindungsgemäßen Hohlraumformteil besteht oder mindestens ein erfindungsgemäßes Hohlraumformteil umfaßt. Grundsätzlich können die Einrichtungsgegenstände zu Zwecken einer Innengestaltung gewissermaßen als Interieur sowie zu Zwecken einer Außengestaltung gewissermaßen als Exterieur eingesetzt werden.
Erfindungsgemäß kann das Hohlraumformteil bestimmte Einheiten bzw. Elemente des Sitzmöbels bilden, wie beispielsweise ein einstückiges Sitz-/Rückenteil (Sitzschale). Alternativ können jeweils zwei unterschiedliche Hohlraumformteile nach der Erfindung für ein Sitzteil bzw. ein Rückenteil verwendet werden. Diesbezüglich kann das Abdeckmaterial gewissermaßen die dem Benutzer zugewandte Seite bilden, während das Trägermaterial die Rückseite des als Sitz-/Rückenteil verwendeten erfindungsgemäßen dreidimensionalen Hohlraumformteils darstellt. Somit resultiert eine gezielte und zweckgerichtete, differenzierte Kombination von ergonomischen Eigenschaften und Stabilitätseigenschaften (Vorderseite bequem, Rückseite stabil). Erfindungsgemäß bedeutet der Begriff "Vorderseite" die dem Benutzer des Sitzmöbels zugewandte Seite des Sitzmöbels, während der Begriff "Rückseite" sich auf die im Benutzungszustand des Sitzmöbels dem Benutzer abgewandte Seite bezieht.

Darüber hinaus kann das erfindungsgemäße dreidimensionale Hohlraumformteil beispielsweise auch für Sättel und dergleichen verwendet werden, insbesondere da das erfindungsgemäße Hohlraumformteil starke Biegungen bzw. ausgeformte Bereiche aufweisen kann, so daß eine exakte Anpassung der aus der erfindungsgemäßen Erfindung hergestellten Sättel an die Anatomie des Benutzers erfolgen kann, wobei insbesondere dem mit dem Füllmaterial befüllten Hohlraum eine wichtige Bedeutung zukommt. Denn durch den Hohlraum wird eine besonders gute Anpassung an die Anatomie des Benutzers gewährleistet. Ein weiterer Anwendungsbereich des erfindungsgemäßen Hohlraumformteils ist beispielsweise dessen Verwendung für Sitzmöbel in öffentlichen Verkehrsmitteln, da aufgrund der zuvor beschriebenen, spezifischen Schichtstruktur mit der flächigen Laminierung eine hohe Schutzresistenz resultiert, da Verschmutzungen nicht tief in das Material eindringen können, und andererseits aufgrund der festen Verklebung der einzelnen Schichten eine hohe Schutzfunktion vor Zerstörung, beispielsweise durch Vandalismus, resultiert.

Zudem kann das erfindungsgemäße Hohlraumformteil als dekoratives Element oder in Form von Hohlraumkanälen, wie Kabelverkleidungen und Abdeckungen, verwendet werden.

Gemäß einem weiteren Aspekt der vorliegenden Erfindung betrifft die vorliegende Erfindung gleichermaßen Einrichtungsgegenstände, wie Möbel, dekorative Elemente, Hohlraumkanäle und dergleichen und vorzugsweise Sitzmöbel, welche mindestens ein erfindungsgemäßes Hohlraumformteil aufweisen bzw. hieraus bestehen. Aufgrund des spezifischen Aufbaus des erfindungsgemäßen Hohlraumformteils kann dieses in bezug auf die Einrichtungsgegenstände, insbesondere Möbel, wie Sitzmöbel, sowohl tragende, stützende und mechanische Funktionen als auch flächenbildende, optische Eigenschaften übernehmen. Dabei weisen die erfindungsgemäßen Einrichtungsgegenstände, insbesondere Möbel, wie Sitzmöbel, gegenüber dem Stand der Technik eine signifikant verringerte Anzahl an Einzelkomponenten auf, welche wiederum mit weniger Arbeitsschritten und geringen Werkzeuginvestitionen gefertigt werden können.

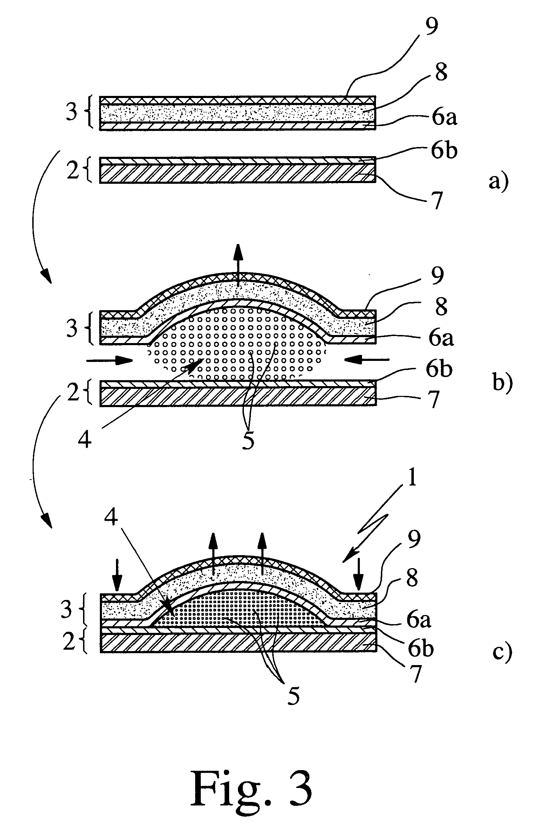

Schließlich ist ein weiterer Gegenstand der vorliegenden Erfindung - gemäß einem weiteren Aspekt der vorliegenden Erfindung - ein in Fig. 3 veranschaulichtes Verfahren zur Herstellung eines dreidimensionalen Hohlraumformteils 1, insbesondere wie zuvor definiert, wobei mindestens ein durch ein Trägermaterial 2 und ein Abdeckmaterial 3 begrenzter Zwischenraum durch Einbringen eines Füllmediums 5, gegebenenfalls unter Verformung des Trägermaterials 2 und/oder des Abdeckmaterials 3, gefüllt wird und das Trägermaterial 2 und das Abdeckmaterial 3 abdichtend miteinander verbunden werden derart, daß mindestens ein abgeschlossener, von dem Trägermaterial 2 und dem Abdeckmaterial 3 begrenzter, mit dem Füllmedium 5 ausgefüllter Hohlraum 4 resultiert.

So kann das erfindungsgemäße Verfahren beispielsweise derart durchgeführt werden, daß zunächst - wie in Fig. 3A dargestellt - ein flächiges bzw. plattenförmiges Trägermaterial 2 und ein Abdeckmaterial 3 bereitgestellt wird, welche jeweils mehrere Schichten der vorgenannten Art, wie einen Träger 7 und eine folienartige Schicht 6b in bezug auf das Trägermaterial 2 sowie eine folienartige Schicht 6a, eine Schaumstoffschicht 8 sowie eine textile Abdeckschicht 9 in bezug auf das Abdeckmaterial 3 umfassen. Dabei kann erfindungsgemäß derart verfahren werden, daß die jeweiligen Schichten des Trägermaterials 2 bzw. des Abdeckmaterials 3 bereits vor der Umformung bzw. des Zusammenführens der jeweiligen Materialien 2, 3 sowie des Einbringens des Hohlraums 4 bzw. des Füllmediums 5 laminiert sind. Gleichermaßen kann es erfindungsgemäß jedoch auch vorgesehen sein, daß die jeweiligen Schichten des Trägermaterials 2 bzw. des Abdeckmaterials 3 während des Umformens des Trägermaterials 2 bzw. des Abdeckmaterials 3 mit einhergehender Ausbildung des Hohlraums bzw. dessen Auffüllen mit dem Füllmedium 5 laminiert werden.

Fig. 3 verdeutlicht schematisch den Ablauf der einzelnen Verfahrensschritte des erfindungsgemäßen Verfahrens: Fig. 3A zeigt die verwendeten plattenförmigen Ausgangsmaterialien, nämlich das Trägermaterial 2 sowie das Abdeckmaterial 3, welche gewissermaßen als Ausgangsmaterial zur Herstellung des erfindungsgemäßen dreidimensionalen Hohlraumformteils 1 fungieren. Dabei weist das Trägermaterial einen zweischichtigen Aufbau mit einem Träger 7 und einer diesem zugeordneten folienartigen Schicht 6b auf, während das Abdeckmaterial 3 einen dreischichtigen Aufbau aufweist, welcher eine folienartige Schicht 6a, eine auf die folienartige Schicht 6a aufgebrachte Schaumstoffschicht 8 sowie ein auf die Schaumstoffschicht 8 aufgebrachtes textiles Trägermaterial 9 umfaßt. Darüber hinaus sind - wie zuvor ausgeführt - aber auch weitere, von dieser Ausführungsform unterschiedliche Schichtaufbauten möglich.

Ein wesentlicher Vorteil des erfindungsgemäßen Verfahrens besteht darin, daß - wie in Fig. 3B verdeutlicht - zwei insbesondere thermoplastische plattenförmige Ausgangsmaterialien gewissermaßen in einem einzigen Arbeitsschritt gleichzeitig unter Ausbildung bzw. Auffüllen eines Hohlraums 4 mit einem Füllmedium 5 dreidimensional verformt und diese gleichzeitig derart miteinander verbunden werden, daß das erfindungsgemäße Hohlraumformteil 1 mit dem abgeschlossenen und aufgefüllten Hohlraum 4 resultiert.

Fig. 3B zeigt die Verformung des Abdeckmaterials 3, was beispielsweise dadurch geschehen kann, daß die zunächst geringfügig voneinander beabstandeten Materialien 2, 3 in eine aus zwei Teilformen bestehende Form überführt werden, wobei die Teilformen als Positiv- bzw. Negativformen ausgebildet sein können. Durch Erwärmen des Trägermaterials 2 bzw. des Abdeckmaterials 3 - was im allgemeinen vor dem Einbringen der Materialien 2, 3 in die Form aber auch während des Einbringens in die Form durchgeführt werden kann - werden die Materialien 2, 3 auf eine Temperatur oberhalb des Erweichungspunktes der Schaumstoffschicht 8 und/oder des Trägers 7 und/oder der Schichten 6a, 6b erwärmt. Eine Verformung des Trägermaterials 2 und/oder des Abdeckmaterials 3 kann beispielsweise durch Druckbeaufschlagung zwischen den Teilformen aber auch durch Anlegen eines Unterdrucks zwischen den Teilformen und den jeweiligen Materialien erreicht werden, wobei sich das Trägermaterials 2 bzw. das Abdeckmaterial an die jeweilige Teilform unter Verformung anlagert. Erfindungsgemäß kann entweder das Trägermaterial 2 oder das Abdeckmaterial 3 oder sowohl das Trägermaterial 2 als auch das Abdeckmaterial 3 auf diese Weise verformt werden. Während dieses Schritts kann - wie in Fig. 3B weiterhin schematisch dargestellt - der zwischen den Materialien 2, 3 entstehende Hohlraum 4 mit einem Füllmedium 5 der zuvor definiert Art aufgefüllt werden bzw. der Hohlraum 4 kann durch druckbeaufschlagtes Einführen des Füllmediums 5 ausgebildet werden. Fig. 3C zeigt das endfertige dreidimensionale Hohlraumformteil 1 der Erfindung, bei welchem die Materialien 2, 3, nämlich das Trägermaterial 2 und das Abdeckmaterial 3 beispielsweise durch Zusammenführen der Teilformen aufeinandergedrückt werden, so daß das Trägermaterial 2 mit dem Abdeckmaterial 3 und insbesondere die folienartige Schicht 6b und die folienartige Schicht 6a miteinander insbesondere abschnittsweise verbunden werden, was zum Abschluß des Hohlraums 4 führt. Dabei kann das Zusammenführen der Materialien 2, 3 gleichzeitig zur Ausbildung des Hohlraumes 4 erfolgen. Nach dem Abkühlen kann das erfindungsgemäße Hohlraumformteil 1 aus der Form bzw. den Formen entnommen werden.

Im Rahmen der Herstellung des erfindungsgemäßen Hohlraumformteils 1 kann das dem Fachmann als solches bekannte Twin-Sheet-Verfahren eingesetzt werden, wobei der Fachmann jederzeit in der Lage ist, die entsprechenden Verfahrensparameter im Lichte der vorliegenden Erfindung anzupassen. Für weitere Ausführungen betreffend das erfindungsgemäße Verfahren kann bezug genommen werden auf die Ausführungen betreffend das erfindungsgemäße Hohlraumformteil, welche hier entsprechend gelten. Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt. Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

## Patentansprüche

1. Dreidimensionales Hohlraumformteil (1) mit mehrschichtigem Aufbau, insbesondere für die Herstellung von Einrichtungsgegenständen, insbesondere Möbeln, vorzugsweise Sitzmöbeln, dekorativen Elementen, Hohlraumkanälen, Automobilzubehör und dergleichen, wobei das Hohlraumformteil (1) mindestens einen von einem Trägermaterial (2) und einem Abdeckmaterial (3) gebildeten Hohlraum (4) aufweist, wobei der Hohlraum (4) zwischen dem Trägermaterial (2) und dem Abdeckmaterial (3) angeordnet und von diesen Materialen (2, 3) begrenzt ist und der Hohlraum (4) mit einem Füllmedium (5) ausgefüllt ist und wobei das Trägermaterial (2) und das Abdeckmaterial (3) gegenüber dem Füllmedium (5) zumindest im wesentlichen undurchlässig sind, wobei das Trägermaterial (2) und/oder das Abdeckmaterial (3), vorzugsweise mindestens das Abdeckmaterial (3), jeweils eine gegenüber dem Füllmedium (5) zumindest im wesentlichen undurchlässige folienartige Schicht (6a, 6b) aufweist bzw. aufweisen.

2. Hohlraumformteil nach Anspruch 1, **dadurch gekennzeichnet, daß** das Trägermaterial (2) und/oder das Abdeckmaterial (3) Wölbungen, Vertiefungen, Ausbuchtungen, Biegungen oder dergleichen aufweist bzw. aufweisen und/oder daß das Trägermaterial (2) und/oder das Abdeckmaterial (3) einen mehrschichtigen Aufbau aufweist bzw. aufweisen.

3. Hohlraumformteil nach Anspruch 1 und/oder 2, **dadurch gekennzeichnet, daß** das Trägermaterial (2) einen Träger (7) aufweist oder hieraus besteht, insbesondere wobei der Träger (7) nichtporös und/oder nichtgeschäumt ausgebildet ist und/oder insbesondere wobei das Material für den Träger (7) ein thermoplastisches, insbesondere hitzeklebriges Material ist und/oder insbesondere wobei das Material für den Träger (7) ein formstabiles Material, insbesondere Kunststoff, Holz, Metall, insbesondere Aluminium, ist.

4. Hohlraumformteil nach einem oder mehreren der vorangehenden Ansprüche, **dadurch gekennzeichnet, daß** das Material der folienartigen Schicht (6a, 6b) ausgewählt ist aus Polyurethanen, Polyolefinen, insbesondere Polyethylen oder Polypropylen, Polyethern, Polyestern, Polyetherestern, Polyimiden und Polytetrafluorethylen und/oder daß die folienartige Schicht (6a, 6b) eine Dicke von 20 mm bis 100 µm, insbesondere 10 mm bis 200 µm, vorzugsweise 5 mm bis 500 µm, aufweist.

5. Hohlraumformteil nach einem oder mehreren der vorangehenden Ansprüche, **dadurch gekennzeichnet, daß** die folienartige Schicht (6a, 6b) elastisch, reißfest und/oder flexibel ist und/oder daß die folienartige Schicht (6a, 6b) dehnbar ist, insbesondere wobei die folienartige Schicht (6a, 6b) eine Dehnbarkeit in mindestens eine Richtung, vorzugsweise in Quer- und Längsrichtung, von mindestens 5 %, insbesondere mindestens 10 %, bevorzugt mindestens 15 %, aufweist.

6. Hohlraumformteil nach einem oder mehreren der vorangehenden Ansprüche, **dadurch gekennzeichnet, daß** die folienartige Schicht (6a, 6b) auf dem Trägermaterial (2) und/oder dem Abdeckmaterial (3) angeordnet ist derart, daß die folienartige Schicht (6a, 6b) dem Hohlraum (4) zugewandt ist.

7. Hohlraumformteil nach einem oder mehreren der vorangehenden Ansprüche, **dadurch gekennzeichnet, daß** das Abdeckmaterial (3) eine vorzugsweise auf der dem Hohlraum (4) abgewandten Seite der folienartigen Schicht (6a) angeordnete Schaumstoffschicht (8) aufweist, insbesondere wobei die Schaumstoffschicht (8) ein Schaumstoff, insbesondere auf Basis von Polyolefinen oder Polyurethanen, vorzugsweise Polyolefinen, ist, insbesondere wobei die Schaumstoffschicht (8) ein geschlossenporiger und/oder geschlossenzelliger Schaumstoff ist.

8. Hohlraumformteil nach einem oder mehreren der vorangehenden Ansprüche, **dadurch gekennzeichnet, daß** das Abdeckmaterial (3) ein vorzugsweise auf der dem Hohlraum (4) abgewandten Seite der folienartigen Schicht (6a) angeordnetes textiles Flächenmaterial (9) aufweist, insbesondere wobei das textile Flächenmaterial (9) ein Gewebe, Gewirke, Gestricke oder Gelege, vorzugsweise ein Gelege, ist.

9. Hohlraumformteil nach einem oder mehreren der vorangehenden Ansprüche, **dadurch gekennzeichnet, daß** das Füllmaterial (5) ausgewählt ist aus der Gruppe von Gasen, insbesondere Luft oder Stickstoff, Flüssigkeiten, Gelen, insbesondere niedrigviskosen, mittelviskosen oder hochviskosen Gelen, und festen Stoffen, wie Schäumen oder Schaumstoffen, insbesondere Polystyrol-, Polyurethan-, oder Polyolefinschaumstoffen.

10. Hohlraumformteil nach einem oder mehreren der vorangehenden Ansprüche, **dadurch gekennzeichnet, daß** die jeweiligen Schichten (6b, 7) des Trägermaterials (2) und/oder die jeweiligen Schichten (6a, 8, 9) des Abdeckmaterials (3) insbesondere mittels eines Laminiermittels und/oder aufgrund der Eigenklebrigkeit, insbesondere Hitzeklebrigkeit, zumindest eines Teils der jeweiligen Schichten (6b, 7) und/oder der jeweiligen Schichten (6a, 8, 9) miteinander verbunden sind.

11. Hohlraumformteil nach einem oder mehreren der vorangehenden Ansprüche, **dadurch gekennzeichnet, daß** das Trägermaterial (2) und das Abdeckmaterial (3) derart miteinander verbunden sind, daß der Hohlraum (4) vom Trägermaterial (2) und Abdeckmaterial (3) vollständig umschlossen ist.

12. Hohlraumformteil nach einem oder mehreren der vorangehenden Ansprüche, **dadurch gekennzeichnet, daß** der Hohlraum (4) von der folienartigen Schicht (6a) der Abdeckschicht (3) und der folienartigen Schicht (6b) der Trägerschicht (2) umschlossen ist und/oder daß der Hohlraum (4) eine vorzugsweise verschließbare Öffnung, insbesondere ein Ventil, zum bedarfsweisen (Nach-)Füllen des Hohlraums (4) mit Füllmedium (5) und/oder zum bedarfsweisen Ablassen von Füllmedium (5) aus dem Hohlraum aufweist.

13. Hohlraumformteil nach einem oder mehreren der vorangehenden Ansprüche, **dadurch gekennzeichnet, daß** das Trägermaterial (2) eine den Hohlraum (4) abgrenzende, gegenüber dem Füllmedium (5) zumindest im wesentlichen undurchlässige folienartige Schicht (6b), insbesondere wie in den Ansprüchen 4 bis 6 definiert, und einen auf der dem Hohlraum (4) abgewandten Seite der folienartigen Schicht (6b) angeordneten Träger (7), insbesondere wie in Anspruch 3 definiert, aufweist und/oder daß das Abdeckmaterial (3) eine den Hohlraum (4) abgrenzende, gegenüber dem Füllmedium (5) zumindest im wesentlichen undurchlässige folienartige Schicht (6a), insbesondere wie in den Ansprüchen 4 bis 6 definiert, und eine auf der dem Hohlraum (4) abgewandten Seite der folienartigen Schicht (6b) angeordnete Schaumstoffschicht (8), insbesondere wie in Anspruch 7 definiert, und ein auf der der folienartigen Schicht (6a) abgewandten Seite der Schaumstoffschicht (8) angeordnetes textiles Flächenmaterial (9), insbesondere wie in Anspruch 8 definiert, umfaßt.

14. Verwendung eines dreidimensionalen Hohlraumformteils (1) nach einem der Ansprüche 1 bis 13 zur Herstellung von Einrichtungsgegenständen, insbesondere Möbeln, vorzugsweise Sitzmöbeln, dekorativen Elementen, Hohlraumkanälen, Automobilzubehör und dergleichen.

15. Einrichtungsgegenstände, insbesondere Möbel, vorzugsweise Sitzmöbel, dekorative Elemente, Hohlraumkanäle, Automobilzubehör und dergleichen, aufweisend mindestens ein dreidimensionales Hohlraumformteil (1) nach einem der Ansprüche 1 bis 13.

16. Verfahren zur Herstellung eines dreidimensionalen Hohlraumformteils (1) nach einem der Ansprüche 1 bis 13, wobei mindestens ein durch ein Trägermaterial (2) und ein Abdeckmaterial (3) begrenzter Zwischenraum durch Einbringen eines Füllmediums (5), gegebenenfalls unter Verformung des Trägermaterials (2) und/oder des Abdeckmaterials (3), gefüllt wird und das Trägermaterial (2) und das Abdeckmaterial (3) abdichtend miteinander verbunden werden derart, daß mindestens ein abgeschlossener, von dem Trägermaterial (2) und dem Abdeckmaterial (3) begrenzter, mit dem Füllmedium (5) ausgefüllter Hohlraum (5) resultiert.
